# NEW EUROPEAN PATENT SPECIFICATION

(11) **EP 0 407 946 B2**
(45) Date of publication and mention of the opposition decision: **17.05.2000**
(45) Mention of the grant of the patent: 15.03.1995
(21) Application number: 90113104.5
(22) Date of filing: 09.07.1990
(51) Int. Cl.: C04B 35/58

(54) **Cubic boron nitride sintered compact and method of preparing the same**
Sinterkörper aus kubischem Bornitrid und Verfahren zu seiner Herstellung
Corps fritté en nitrure de bore cubique et procédé pour sa fabrication

(30) Priority: 11.07.1989 JP 17972889
(43) Date of publication of application: 16.01.1991
(73) Proprietor: SUMITOMO ELECTRIC INDUSTRIES, LTD., Osaka-shi, Osaka 541 (JP)
(72) Inventor: Sumiya, Hitoshi, 1-1, Koyakita 1-chome, Itami-shi, Hyogo (JP)
(74) Representative: Grosse, Wolfgang, Dipl.-Ing.

(56) References cited:
- EP-A- 0 240 913
- DE-A- 2 500 515
- DE-A- 3 030 362
- FR-A- 2 201 268
- US-A- 4 772 575
- Journal of Material Science 18 (1983), p. 3054-3062

## Description

### BACKGROUND OF THE INVENTION

### Field of the Invention

The present invention relates to a cubic boron nitride sintered compact which is applied to a cutting tool, or a heat sink material for a semiconductor laser or an LSI, for example, and a method of preparing the same.

### Description of the Background Art

Cubic boron nitride (hereinafter referred to as cBN) is generally employed as a material for a cutting tool, since the same is the hardest material next to diamond and has extremely stable thermal and chemical properties. Further, cBN is excellent in thermal conductivity after diamond, and expected is application of cBN to a heat sink (radiation substrate) for a semiconductor laser or the like. However, it is extremely difficult to prepare a large-sized single crystal of cBN, and hence a sintered compact formed of cBN grains of several micrometers is watched as a practicable material.

Since it is extremely difficult to directly sinter cBN grains (powder) independently, a metal such as Al or Co. a carbide such as TiC, or a nitride such as TiN is generally employed as a binder for sintering the cBN grains. In a cBN sintered compact containing the aforementioned binder, however, the binder defines a continuous phase among the cBN grains, and hence hardness and thermal conductivity of the sintered compact are so significantly reduced that it is difficult to sufficiently effectuate excellent properties originally provided in cBN.

Japanese Patent Laying-Open No. 54-33510 or Material Research Bulletin, Vol. 7 (1972). pp. 999 to 1004 discloses a known method of preparing a cBN sintered compact containing no binder with a starting material of atmospheric pressure type BN (hexagonal boron nitride: hereinafter referred to as hBN) by directly converting hBN to cBN under superhigh pressure/temperature conditions of 6.5 GPa and at least 1800°C and simultaneously sintering the same. However, such a method of preparing a cBN sintered compact by direct conversion requires extremely high pressure/high temperature conditions while the same is insufficient in reproducibility, to cause problems in industrial production.

On the other hand, each of Japanese Patent Laying-Open Nos. 58-176179 and 59-57967 (Japanese Patent Publication Nos. 59-5547 and 60-28782) discloses a method which can prepare a cBN sintered compact under relatively mild pressure/temperature conditions as compared with the aforementioned direct conversion method with excellent reproducibility. According to this method, a small quantity of alkaline earth metal boron nitride is added to or diffused/contained in hBN powder or a sintered compact thereof, which in turn is treated under a thermodynamically stable pressure condition for hBN at a temperature exceeding 1350°C, This method is adapted to convert hBN to cBN with a catalyst of the alkaline earth metal boron nitride while bonding the cBN grains with each other simultaneously with such conversion. It is said that according to this method, the material can be treated at a temperature exceeding 1350°C, which is the eutectic temperature of the alkaline earth metal boron nitride and hBN, to obtain a strong sintered compact which is formed of only cBN grains of 3 to 10 µm in unit grain diameter containing substantially no impurity.

U. S. Patent No. 4.772,575 also discloses a method of preparing a cBN sintered compact using alkaline earth metal boron nitride as a catalyst. In the method disclosed in U. S. Patent No. 4,772.575, a sintered compact of cubic boron nitride is made by adsorbing and/or diffusing 0.005 to 1.000 percent by weight of water into a boron nitride compact containing alkaline earth metal boron nitride as a catalyst.

FR 2 201 268 discloses a material containing 85 - 97 wt-% cubic boron nitride, 1 - 10 wt-% of refractory materials and a total quantity of about 2 - 5 wt-% of borides and magnesium and/or calcium oxides. According to this document, this material is formed by applying heat and pressure in the range of 2000 - 2200°C and 85 - 95 kilobars on a mixture of 85 - 97 wt-% of hexagonal boron nitride, 1 - 10 wt-% of refractory materials and about 2 - 5 wt % of calcium and/or magnesium borides.

Another way to produce cubic boron nitride is described by Tadao Sato et al. 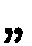 Journal of Materials Science" **18** (1983), 3054 - 3062. According to this reference, cubic boron nitride can be synthesized by treating hexagonal boron nitride in the presence of Ca₃B₂N₄ which act as a flux for BN.

The inventor has experimentally prepared a cBN sintered compact by the aforementioned method using the alkaline earth metal boron nitride, to make a cutting test with the as-formed sintered compact. As the result, it has been recognized that the cBN sintered compact was so extremely worn by failing of cBN grains arid transgranular rupture that no expected performance was attained. The maximum thermal conductivity of this cBN sintered compact was 6 w/cm·°C, which was twice or three times excellent as compared with BeO (beryllium oxide) or AIN (aluminum nitride) generally employed for a heat sink material. However, it has also been recognized that this cBN sintered compact was rather largely dispersed in thermal conductivity, which is the most important basic property of a heat sink material.

In order to solve this problem, the inventor has made deep study on the cBN sintered compact obtained by the aforementioned method, to recognize that unit grains forming the cBN sintered compact were irregular and this disadvantage was promoted as abnormal grain growth was increased. Such irregularity of the grains easily leads to falling of the grains and transgranular rupture (cleavage), to reduce wear resistance and strength (toughness) of the sintered compact. Further, denseness of the sintered compact is deteriorated to increase phonon scattering at grain boundaries, whereby thermal conductivity is reduced.

The aforementioned conventional method uses the alkaline earth metal boron nitride as a catalyst for converting hBN to cBN in a eutectic state with BN, and hence states of generation of cBN cores and following growth of cBN crystal grains are significantly varied with the dispersed state of the catalyst, the treatment temperature and fine pressure variation. According to this method, therefore, partial abnormal grain growth of cBN grains easily takes place and hence it is extremely difficult to control configurations and sizes of the grains.

DE-OS-2 500 515 discloses the preparation of cubic boron nitride from hexagonal boron nitride by a high temparature/high pressure treatment wherein water is added to the starting material. Water can be provided in form of an aqueous solution of an alkaline substance such as an alkali earth metal hydroxide. It is further disclosed that by the addition of water small boron nitrid crystals can be obtained.

This reference is directed to the preparation of grainshaped cBN in which it is desired that the individual crystals do not interfere with each other.

### SUMMARY OF THE INVENTION

An object of the present invention is to provide a cBN sintered compact having a dense and homogeneous structure, which is suitable for a material for a cutting tool or a heat sink, by controlling the sizes and configurations of cBN grains.

The essential features of the invention are the subject-matter of independant claims 1 and 6; preferred features of the invention are the subject-matter of dependant claims 2-5 and 7 and 8.

The inventive method of preparing a cBN sintered compact comprises the steps of:
(1) adding a magnesium boron nitride to atmospheric pressure type boron nitnide (normal hBN) and further adding 0.01 to 5.0 percent by weight of a magnesium hydroxide to the atmospheric pressure type boron nitride; and
(2) performing high temperature/high pressure treatment on the raw material under a thermodynarnically stable pressure condition for cBN at a temperature exceeding a level capable of converting the atmospheric pressure type boron nitride to cBN with action of said magnesium boron nitride, whereby said magnesium boron nitride is added to said atmospheric pressure type boron nitride in a quantity within a range of 0.01 to 5.00 per cent.

The as-formed cBN sintered compact contains 0.01 to 5.0 percent by weight of a magnesium oxide, and cBN grains are densely bonded with each other. The inventive cBN sintered compact is particularly characterized in that the magnesium oxide is interspersed within a matrix of the cBN grains.

The atmospheric pressure type boron nitride, serving as a raw material, is generally prepared from hBN, while rhombohedral baron nitride (rBN), amorphous boron nitride (aBN) or pyrolytic boron nitride (pBN) is also employable. Purity of such a raw material must be as high as possible, while the content of B₂O₃, in particular, is preferably not more than 0.3 percent by weight, so that the same will not prevent conversion of hBN to cBN.

The cBN synthetic catalyst is prepared from magnesium boron nitride. The content of the catalyst is within a range of 0.01 to 5.0 mole percent with respect to the raw material of atmospheric pressure type boron nitride. If the content of the catalyst is not more than 0.01 mole percent, conversion of hBN to cBN is not sufficiently promoted. If the content exceeds 5.0 mole percent, on the other hand, a large quantity of the catalyst is left in the cBN sintered body to extremely reduce mechanical properties and thermal conductivity of the cBN sintered compact.

Magnesium hydroxide (Mg(OH)₂), is added in order to suppress abnormal grain growth of cBN. The content of such an admixture is within a range of 0.01 to 5.0 percent by weight with respect to the raw material of atmospheric pressure type boron nitride. A sufficient effect cannot be attained if the content of the admixture is not more than 0.01 percent by weight, while a large quantity of magnesium oxide, is left in the cBN sintered compact if the content exceeds 5.0 percent by weight, to reduce mechanical performance and thermal conductivity of the cBN sintered body.

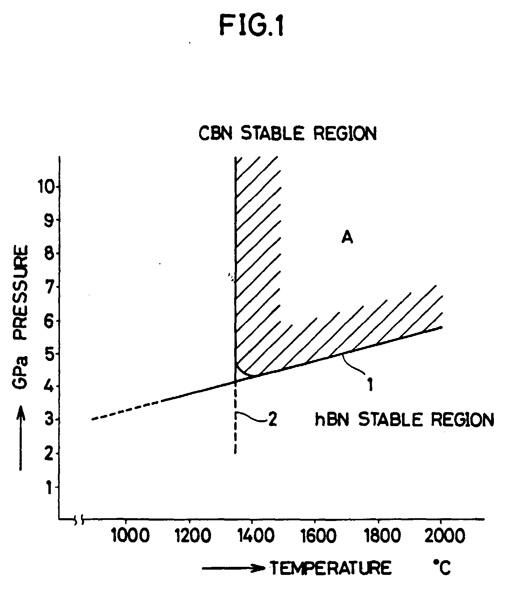

The aforementioned atmospheric pressure type boron nitride mixed with the cBN synthetic catalyst and the magnesium hydroxide is treated with a high temperature/high pressure generator under a thermodynamically stable pressure condition for cBN at a temperature exceeding a level capable of converting the atmospheric pressure type boron nitride to cBN with action of the cBN synthetic catalyst, such as a temperature exceeding 1350°C. Fig. 1 is a graph showing an hBN-cBN thermal equilibrium curve. Referring to Fig. 1, a cBN stable region appears above a line 1 and an hBN stable region appears under the line 1, while numeral 2 denotes a eutectic line of the magnesium boron nitride and boron nitride (BN). In this case, therefore, treatment is performed in a region A shown in Fig. 1 at a temperature exceeding 1350°C.

Upon the aforementioned treatment, the atmospheric pressure type boron nitride is converted to cubic boron nitride (cBN) simultaneously with sintering of cBN grains. At this time, the magnesium hydroxide (Mg(OH)₂ added to the raw material is decomposed into magnesium oxide (MgO) of the alkaline earth metal. The generated MgO blocks floating of eutectic materials to suppress abnormal grain growth of cBN. Further, the generated MgO is not left in boundaries between cBN grains but interspersed among triple points. In the as-formed cBN sintered compact, therefore, all cBN grains are continuously bonded with each other so that characteristics such as hardness and thermal conductivity are not influenced by the residual MgO. Further, the cBN sintered compact is dense with uniform grain diameters.

As hereinabove described in detail, the present invention is adapted to obtain a cBN sintered compact by adding the cBN synthetic catalyst and magnesium hydroxide to atmospheric pressure type boron nitride and treating the same under high pressure/high temperature conditions. According to the present invention, it is possible to obtain a cBN sintered compact which has a dense and homogeneous structure with strongly bonded cBN grains by simply adding magnesium hydroxide to the raw material, dissimilarly to the conventional methods. The as-formed cBN sintered compact, which has mechanical properties superior to those of conventional ones, can be applied to a cutting tool and the like. Further, the cBN sintered compact has such high thermal conductivity that the same is optimum as a heat sink material. Thus, the present invention has great effects as a cBN sintered compact and a method of preparing the same.

These and other objects, features, aspects and advantages of the present invention will become more apparent from the following detailed description of the present invention when taken in conjunction with the accompanying drawings.

### BRIEF DESCRIPTION OF THE DRAWING

Fig. 1 is a graph showing temperature-pressure equilibrium in the case of employing magnesium boronitride as a cBN synthetic catalyst, for illustrating a region capable of preparing a cBN sintered compact according to the present invention.

### DESCRIPTION OF THE PREFERRED EMBODIMENTS

### Example 1

Powder of hBN containing 0.2 percent by weight of B₂O₃, powder of magnesium boron nitride (Mg₃BN₃) and magnesium hydroxide (Mg(OH)₂) were sufficiently mixed in nitrogen gas in the ratios 95.5:4:0.5 in weight percentage. In this case, the content of magnesium boron nitride with respect to hBN was about 1 mole percent.

This mixture was embossed, subjected to high pressure/high temperature treatment with a girdle type high temperature/high pressure generator under pressure and temperature conditions of 5.5 GPa and 1500°C, and then quenched to take out the product.

The as-formed sample was a strong gray sintered compact. It was proved by X-ray diffraction that this sample was a cBN sintered compact, while a small quantity of MgO and an extremely trace quantity of Mg₃BN₃ high-pressure phase were detected. The surface of this cBN sintered compact was observed with a scanner type electron microscope (SEM), to recognize that cBN grains having relatively uniform grain diameters of 5 to 8 µm were continuously bonded in a dense structure. The compact was further observed with a transmission type electron microscope (TEM), to recognize that MgO was interspersed among only triple points of the cBN grains.

Thermal conductivity and Vickers hardness of the aforementioned sintered compact were measured at the room temperature, to recognize high values of 6.5 w/cm·°C and 6000 to 6500 kg/mm² respectively.

For the purpose of comparison, 1 mole percent of Mg₃BN₃ powder was added to hBN powder, and the mixture was subjected to high temperature/high pressure treatment under the same conditions as above with no addition of Mg(OH)₂, to prepare a cBN sintered compact The structure of this cBN sintered compact was observed with a scanner type electron microscope (SEM), to recognize that the cBN grains had rather irregular grain diameters of 3 to 10 µm although the grains were bonded with each other, while coarse grains having diameters of 20 to 30 µm were partially observed. Thermal conductivity and Vickers hardness of this sample were 5.3 w/cm·°C and 5000 to 6500 kg/mm² respectively. These values were dispersed low as compared with the inventive sample.

### Example 2

Similarly to Example 1, 1 mole percent of Mg₃BN₃ and 1.2 percent by weight of Mg(OH)₂ were added to hBN powder, and this mixture was subjected to high pressure/high temperature treatment for 30 minutes under pressure and temperature conditions of 5.0 GPa arid 1400°C, to obtain a sintered compact.

This sintered compact had an extremely dense and homogeneous structure, which was formed of fine cBN grains of about 1 µm in diameter. Although this sintered compact exhibited rather low thermal conductivity of 4.5 w/cm·°C, its Vickers hardness was at a high value of 6500 kg/mm². This sintered compact was cut with a laser, to produce a cutting tool.

For the purpose of comparison, a cutting tool of the same configuration was produced by a commercially available cBN sintered compact (bonded member) which was prepared by bonding cBN grains of 3 µm in mean grain size with a binder mainly formed of TiN. This cBN sintered compact contained about 30 percent by volume of the binder.

The aforementioned cutting tools were subjected to a cutting test of cuffing members of gray cast iron (FC25) under conditions of a cutting speed of 500 rn/min., depth of cut of 0.2 mm, and a feed rate of 0.1 mm/rev.

The former cutting tool produced by the inventive sintered compact was capable of performing cutting for 40 minutes before a wear width at its tip flank reached 0.1 mm. In the latter cutting tool produced by the commercially available sintered compact, on the other hand, the flank wear width reached 0.1 mm upon cuffing for about 15 minutes.

Although the present invention has been described and illustrated in detail, it is clearly understood that the same is by way of illustration and example only and is not to be taken by way of limitation.

## Claims

1. A cubic boron nitride sintered compact obtained by adding a magnesium boron nitride and a magnesium hydroxide to atmospheric pressure type boron nitride and performing high temperature/high pressure treatment on the mixture **characterized in that** said cubic boron nitride sintered compact contains 0.01 to 5.0 percent by weight of a magnesium oxide and is formed of cubic boron nitride grains densely bonded with each other whereby said magnesium oxide is discontinuously interspersed within a matrix of said cubic boron nitride grains in said cubic boron nitride sintered compact.

2. A cubic boron nitride sintered compact in accordance with claim 1, **characterized in that** said magnesium oxide is present mainly in triple points of said cubic boron nitride grains.

3. A cubic boron nitride sintered compact in accordance with claim 1, **characterized in that** said atmospheric pressure type boron nitride is hexagonal boron nitride containing not more than 0.3 percent by weight of B₂O₃, and the quantity of said magnesium boron nitride with respect to said atmospheric pressure type boron nitride is within a range of 0.01 to 5.0 mole percent.

4. A cubic boron nitride sintered compact in accordance with claim 1, **characterized in that** grain diameters of said cubic boron nitride grains are not more than 8 µm and difference between the maximum and minimum grain diameters is not more than 3 µm, thermal conductivity of said cubic boron nitride sintered compact is within a range of 4,5 to 6.5 w/cm*°C, and Vickers hardness of said cubic boron nitride sintered compact is within a range of 5000 to 6500 kg/mm².

5. A cubic boron nitride sintered compact in accordance with claim 1 **characterized in that** it is obtained by adding a magnesium boron nitride to atmospheric pressure type boron nitride and performing high temperature/high pressure treatment on the mixture, said cubic boron nitride sintered compact containing 0.01 to 5.0 percent by weight of a magnesium oxide mainly in triple points of cubic boron nitride grains, grain diameters of said cubic boron nitride grains being not more than 8 µm, with difference between maximum and minimum grain diameters being not more than 3 µm.

6. A method of preparing a cubic boron nitride sintered compact according to claim 1 by adding a magnesium boron nitride to atmospheric pressure type boron nitride, said method being **characterized by** the following steps:
adding said magnesium boron nitride and 0.01 to 5.0 percent by weight of a magnesium hydroxide to said atmospheric pressure type boron nitride;
and performing high pressure/high temperature treatment on the mixture under a thermodynamically stable pressure condition for cubic boron nitride at a temperature exceeding a level capable of converting said atmospheric pressure type boron nitride to cubic boron nitride with action of said magnesium boron nitride, whereby said magnesium boron nitride is added to said atmospheric pressure type boron nitride in a quantity within a range of 0.01 to 5.00 percent.

7. A method of preparing a cubic boron nitride sintered compact in accordance with claim 6, **characterized in that** Mg(OH)₂ is employed as said magnesium oxide.

8. A method of preparing a cubic boron nitride sintered body in accordance with claim 6, **characterized by** the following steps: adding a magnesium boron nitride to atmospheric pressure type boron nitride containing not more than 0.3 percent by weight of B₂O₃ in a quantity within a range of 0.01 to 5.0 mole percent with respect to said atmospheric pressure type boron nitride; adding a magnesium hydroxide to said atmospheric pressure type boron nitride in a quantity within a range of 0.01 to 5.0 percent by weight with respect to said atmospheric pressure type boron nitride; and performing high temperature/high pressure treatment on said atmospheric pressure type boron nitride with catalytic action of said magnesium boron nitride under a thermodynamically stable pressure condition for cubic boron nitride, thereby converting said atmospheric pressure type boron nitride to cubic boron nitride, whereby the product contains 0.01 to 5.0 percent by weight of a magnesium oxide.

## Patentansprüche

1. Sinterkörper aus kubischem Bornitrid, der durch Zugabe eines Magnesiumbornitrids und eines Magnesiumhydroxids zu einem Bornitrid vom Atmosphärendrucktyp und Durchführen einer Hochtemperatur-/ Hochdruckbehandlung an der Mischung erhalten wird, **gekennzeichnet dadurch,** daß der Sinterkörper aus kubischem Bornitrid 0,01 bis 5,0 Gewichtsprozent eines Magnesiumoxids enthält und aus Körnern von kubischem Bornitrid gebildet ist, die dicht miteinander verbunden sind, wodurch das Magnesiumoxid innerhalb einer Matrix der Körner des kubischen Bornitrids in dem Sinterkörper aus kubischem Bornitrid diskontinuierlich verteilt ist.

2. Sinterkörper aus kubischem Bornitrid nach Anspruch 1, **dadurch gekennzeichnet,** daß das Magnesiumoxid hauptsächlich an Tripelpunkten der Körner des kubischen Bornitrids vorhanden ist.

3. Sinterkörper aus kubischem Bornitrid nach Anspruch 1, **dadurch gekennzeichnet,** daß das Bornitrid vom Atmosphärendrucktyp ein hexagonales Bornitrid ist, welches nicht mehr als 0,3 Gewichtsprozent B₂O₃ enthält, und die Menge des Magnesiumbornitrids in Bezug auf das Bornitrid vom Atmosphärendrucktyp innerhalb eines Bereiches von 0,01 bis 5,0 Molprozent liegt.

4. Sinterkörper aus kubischem Bornitrid nach Anspruch 1, **dadurch gekennzeichnet,** daß die Korndurchmesser der Körner des kubischen Bornitrids nicht mehr als 8 µm betragen und die Differenz zwischen dem maximalen und dem minimalen Korndurchmesser nicht mehr als 3 µm beträgt, die thermische Leitfähigkeit des Sinterkörpers aus kubischem Bornitrid innerhalb eines Bereiches von 4,5 bis 6,5 w/cm * °C ist und die Vickershärte des Sinterkörpers aus kubischem Bornitrid innerhalb eines Bereiches von 5000 bis 6500 kg/mm² liegt.

5. Sinterkörper aus kubischem Bornitrid nach Anspruch 1, **dadurch gekennzeichnet,** daß er durch Zugabe eines Magnesiumbornitrids zu einem Bornitrid vom Atmosphärendrucktyp und Durchführen einer Hochtemperatur/Hochdruckbehandlung an der Mischung erhalten wird,wobei der Sinterkörper aus kubischem Bornitrid 0,01 bis 5,0 Gewichtsprozent eines Magnesiumoxids hauptsächlich an den Tripelpunkten der Körner des kubischen Bornitrids aufweist,
der Korndurchmesser der Körner des kubischen Bornitrids nicht mehr als 8 µm beträgt, wobei die Differenz zwischen dem maximalen und dem minimalen Korndurchmesser nicht mehr als 3 µm beträgt.

6. Verfahren zur Herstellung eines Sinterkörpers aus kubischem Bornitrid nach Anspruch 1 durch Zugabe eines Magnesiumbornitrids zu einem Bornitrid vom Atmosphärendrucktyp, wobei das Verfahren **gekennzeichnet** ist durch die folgenden Schritte: Zugeben des Magnesiumbornitrids und 0,01 bis 5,0 Gewichtsprozent eines Magnesiumhydroxids zu dem Bornitrid vom Atmosphärendrucktyp; und
Durchführen einer Hochdruck-/ Hochtemperaturbehandlung an der Mischung unter einer thermodynamischen stabilen Druckbedingung für das kubische Bornitrid bei einer Temperatur, die einen Pegel überschreitet, welcher in der Lage ist, das Bornitrid vom Atmosphärendrucktyp in ein kubisches Bornitrid unter Mitwirkung des Magnesiumbornitrids umzusetzen, wobei das Magnesiumbornitrid zu dem Bornitrid vom Atmosphärendrucktyp in einer Menge innerhalb des Bereiches von 0,01 bis 5,00 Prozent zugegeben wird.

7. Verfahren zur Herstellung eines Sinterkörpers aus kubischem Bornitrid nach Anspruch 6, **dadurch gekennzeichnet,** daß Mg (OH)₂ als Magnesiumoxid verwendet wird.

8. Verfahren zur Herstellung eines Sinterkörpers aus kubischem Bornitrid nach Anspruch 6, **gekennzeichnet** durch die folgenden Schritte:
Zugeben eines Magnesiumbornitrids zu einem Bornitrid vom Atmosphärendrucktyp, das nicht mehr als 0,3 Gewichtsprozent B₂O₃ in einer Menge innerhalb eines Bereiches von 0,01 bis 5,0 Molprozent in Bezug auf das Bornitrid des Atmosphärendrucktyps enthält;
Zugeben eines Magnesiumhydroxides zu dem Bornitrid des Atmosphärendrucktyps in einer Menge innerhalb eines Bereiches von 0,01 bis 5,0 Gewichtsprozent in Bezug auf das Bornitrid des Atmosphärendrucktyps; und Durchführen einer Hochtemperatur-/ Hochdruckbehandlung an dem Bornitrid vom Atmosphärendrucktyp mit einer Katalysatorwirkung des Magnesiumbornitrids unter einer thermodynamisch stabilen Druckbedingung für das kubische Bornitrid, wobei das Bornitrid des Atmosphärendrucktyps in kubisches Bornitrid umgesetzt wird, wodurch das Produkt 0,01 bis 5,0 Gewichtsprozent eines Magnesiumoxides enthält.

## Revendications

1. Corps fritté en nitrure de bore cubique obtenu en ajoutant un boronitrure de magnésium et un hydroxyde de magnésium à du nitrure de bore du type obtenu à la pression atmosphérique et en appliquant un traitement haute température/haute pression au mélange, caractérisé en ce que ledit corps fritté en nitrure de bore cubique contient 0,01 à 5,0 pour cent en poids d'un oxyde de magnésium et est formé de grains de nitrure de bore cubique liés ensemble d'une manière dense de sorte que ledit oxyde de magnésium est dispersé d'une manière discontinue à l'intérieur d'une matrice desdits grains de nitrure de bore cubique dans ledit corps fritté en nitrure de bore cubique.

2. Corps fritté en nitrure de bore cubique selon la revendication 1, caractérisé en ce que
ledit oxyde de magnésium est présent principalement en des points triples desdits grains de nitrure de bore cubique.

3. Corps fritté en nitrure de bore cubique selon la revendication 1, caractérisé en ce que ledit nitrure de bore du type obtenu à la pression atmosphérique est du nitrure de bore cubique hexagonal ne contenant pas plus de 0,3 pour cent en poids de B₂O₃, et
la quantité dudit boronitrure de magnésium par rapport audit nitrure de bore du type obtenu à la pression atmosphérique est dans une gamme de 0,01 à 5,0 mole pour cent.

4. Corps fritté en nitrure de bore cubique selon la revendication 1, caractérisé en ce que
les diamètres de grains desdits grains de nitrure de bore cubique ne dépassent pas 8 µm et la différence entre les diamètres de grains maximum et minimum ne dépasse pas 3 µm,
la conductivité thermique dudit corps fritté en nitrure de bore cubique est dans une gamme de 4,5 à 6,5 w/cm*°C, et
la dureté Vickers dudit corps fritté en nitrure de bore cubique est dans une gamme de 5 000 à 6 500 kg/mm².

5. Corps fritté en nitrure de bore cubique selon la revendication 1, caractérisé en ce qu'il est obtenu en ajoutant un boronitrure de magnésium à du nitrure de bore du type obtenu à la pression atmosphérique et en appliquant au mélange un traitement haute température/haute pression, ledit corps fritté en nitrure de bore cubique contenant de 0,01 à 5,0 pour cent en poids d'un oxyde de magnésium principalement en des points triples des grains de nitrure de bore cubique,
les diamètres de grains desdits grains de nitrure de bore cubique ne dépassant pas 8 µm, avec une différence entre les diamètres de grains maximum et minimum ne dépassant pas 3 µm.

6. Procédé pour la préparation d'un corps fritté en nitrure de bore cubique selon la revendication 1 consistant à ajouter un boronitrure de magnésium à du nitrure de bore du type obtenu à la pression atmosphérique, ledit procédé étant caractérisé par les étapes suivantes :
l'ajout dudit boronitrure de magnésium et de 0,01 à 5,0 pour cent en poids d'un hydroxyde de magnésium audit nitrure de bore du type obtenu à la pression atmosphérique ; et
l'application d'un traitement haute pression/haute température à ce mélange dans des conditions de pression thermodynamiquement stable pour le nitrure de bore cubique à une température dépassant un niveau capable de convertir ledit nitrure de bore du type obtenu à la pression atmosphérique en nitrure de bore cubique avec l'action dudit boronitrure de magnésium, de sorte que ledit boronitrure de magnésium est ajouté audit nitrure de bore du type obtenu à la pression atmosphérique en une quantité dans une gamme de 0,01 à 5,00 pour cent.

7. Procédé pour la préparation d'un corps fritté en nitrure de bore cubique selon la revendication 6, caractérisé en ce que Mg(OH)₂ est utilisé en tant que ledit oxyde de magnésium.

8. Procédé pour la préparation d'un corps fritté en nitrure de bore cubique selon la revendication 6, caractérisé par les étapes suivantes :
l'ajout d'un nitrure de boronitrure de magnésium à du nitrure de bore du type obtenu à la pression atmosphérique ne contenant pas plus de 0,3 pour cent en poids de B₂O₃ dans une quantité dans la gamme de 0,01 à 5,0 mole pour cent par rapport audit nitrure de bore du type obtenu à la pression atmosphérique ;
l'ajout d'un hydroxyde de magnésium audit nitrure de bore du type obtenu à la pression atmosphérique dans une quantité dans la gamme de 0,01 à 5,0 pour cent en poids par rapport audit nitrure de bore du type obtenu à la pression atmosphérique ; et
l'application d'un traitement haute température/haute pression sur ledit nitrure de bore du type obtenu à la pression atmosphérique avec une action catalytique dudit boronitrure de magnésium dans des conditions de pression thermodynamiquement stable pour le nitrure de bore cubique, convertissant ainsi ledit nitrure de bore du type obtenu à la pression atmosphérique en nitrure de bore cubique, de sorte que le produit contient de 0,01 à 5,0 pour cent en poids d'un oxyde de magnésium.
